# EUROPÄISCHE PATENTANMELDUNG

(11) **EP 4 601 156 A1**
(43) Veröffentlichungstag der Anmeldung: **13.08.2025**
(21) Anmeldenummer: 24156764.3
(22) Anmeldetag: 09.02.2024
(51) Int. Cl.: H02J 7/02

(54) **TOPOLOGIE FÜR EINE MEHRFACHLADEVORRICHTUNG**

(71) Anmelder: Hilti Aktiengesellschaft, 9494 Schaan (LI)
(72) Erfinder: Zagler, Andreas, 88045 Friedrichshafen (DE); Kerler, Johannes, 86877 Walkertshofen (DE); Guggemos, Johannes, 85055 Ingolstadt (DE)
(74) Vertreter: Hilti Aktiengesellschaft Corporate Intellectual Property

(57) **Zusammenfassung**

Ladevorrichtung, insbesondere zum Versorgen wenigstens einer ersten und zweiten Energiespeichereinheit mit elektrischer Energie, enthaltend eine Netzstromanbindung zur wiederlösbaren Verbindung mit einer Netzstromquelle sowie eine Steuervorrichtung.

Die Ladevorrichtung enthält einen Gleichrichter, einen Leistungsfaktorkorrekturfilter, eine Voreinstellungsvorrichtung mit einen isolierten Gleichspannungswandler und Kondensator zum Erzeugen einer isolierten Zwischenkreisspannung sowie eine Feinregulierungsvorrichtung mit wenigstens einem ersten und zweiten geregelten und unisolierten Gleichspannungswandler, wobei jeder Gleichspannungswandler eine Schnittstelleneinrichtung zum wiederlösbaren Verbinden mit einer Energiespeichereinheit enthält, sodass ein Leistungswert an der ersten und/oder zweiten Schnittstelleneinrichtung bereitstellbar ist, und wobei der Leistungswert an der ersten und/oder zweiten Schnittstelleneinrichtung wenigstens einem Anteil einer Gesamtleistung entspricht.

## Beschreibung

Die vorliegende Erfindung betrifft eine Ladevorrichtung, insbesondere zum Versorgen wenigstens einer ersten und zweiten Energiespeichereinheit mit elektrischer Energie, enthaltend eine Netzstromanbindung zur wiederlösbaren Verbindung mit einer Netzstromquelle sowie eine Steuervorrichtung.

Des Weiteren betrifft die vorliegende Erfindung ein System enthaltend eine Ladevorrichtung und wenigstens eine erste und zweite mit der Ladevorrichtung verbindbaren Energiespeichereinheit, wobei die Ladevorrichtung eine Netzstromanbindung zur wiederlösbaren Verbindung mit einer Netzstromquelle sowie eine Steuervorrichtung enthält.

Darüber hinaus betrifft die vorliegende Erfindung ein Verfahren zum Steuern und Regeln eines Systems enthaltend eine Ladevorrichtung und wenigstens eine erste und zweite mit der Ladevorrichtung verbindbaren Energiespeichereinheit, wobei die Ladevorrichtung eine Netzstromanbindung zur wiederlösbaren Verbindung mit einer Netzstromquelle sowie eine Steuervorrichtung enthält, und wobei die wenigstens erster und zweiter Energiespeichereinheit jeweils einen Transceiver zum Senden und Empfangen von Signalen enthält.

Aus dem Stand der Technik sind Ladevorrichtungen (auch Lader, Ladegerät oder Charger genannt) zum Laden von Akkumulatoren oder anderen Energiespeichereinheiten weitestgehend bekannt. Die Akkumulatoren und Energiespeichereinheiten können dabei beispielsweise zur Versorgung von Werkzeugmaschinen (d.h. Bohrmaschinen, Bohrhammer, Sägen, Schleifgeräte, Lampen oder dergleichen) verwendet werden. Derartige Ladevorrichtungen verfügen dabei über eine oder mehrere Schnittstelleneinrichtungen, durch welche Akkumulatoren oder anderen Energiespeichereinheiten wiederlösbar mit der Ladevorrichtung verbunden und mit elektrischer Energie versorgt werden können.

Die zum Stand der Technik gehörenden Ladevorrichtungen sind oftmals zu aufwendig bzw. komplex und dadurch zu kostspielig konzipiert.

Es ist damit Aufgabe der vorliegenden Erfindung das vorstehend beschriebene Problem zu lösen.

Die Aufgabe wird gelöst durch den Gegenstand des unabhängigen Patentanspruchs 1, 8 und 10.

Weitere vorteilhafte Ausführungsformen des erfindungsgemäßen Gegenstands sind in den entsprechenden abhängigen Patentansprüchen enthalten.

Die Aufgabe wird dabei insbesondere gelöst durch eine Ladevorrichtung, insbesondere zum Versorgen wenigstens einer ersten und zweiten Energiespeichereinheit mit elektrischer Energie, enthaltend eine Netzstromanbindung zur wiederlösbaren Verbindung mit einer Netzstromquelle sowie eine Steuervorrichtung.

Erfindungsgemäß enthält die Ladevorrichtung
- einen Gleichrichter;
- einen Leistungsfaktorkorrekturfilter;
- eine Voreinstellungsvorrichtung mit einen isolierten Gleichspannungswandler und Kondensator zum Erzeugen einer isolierten Zwischenkreisspannung sowie
- eine Feinregulierungsvorrichtung mit wenigstens einem ersten und zweiten geregelten und unisolierten Gleichspannungswandler, wobei jeder Gleichspannungswandler eine Schnittstelleneinrichtung zum wiederlösbaren Verbinden mit einer Energiespeichereinheit enthält, sodass ein Leistungswert an der ersten und/oder zweiten Schnittstelleneinrichtung bereitstellbar ist, und wobei der Leistungswert an der ersten und/oder zweiten Schnittstelleneinrichtung wenigstens einem Anteil einer Gesamtleistung entspricht.

Der Leistungsfaktorkorrekturfilter kann auch als Power Factor Correction-Filter bezeichnet werden.

Der Kondensator kann dabei auch als Zwischenkreiskondensator bezeichnet werden.

Gemäß einer weiteren vorteilhaften Ausführungsform kann es möglich sein, dass die Voreinstellungsvorrichtung wenigstens einen Leistungsfaktorkorrekturfilter enthält.

Entsprechend einer alternativen Ausführungsform kann es möglich sein, dass der Leistungsfaktorkorrekturfilter (Power Factor Correction Filter (PFC-Filter)) und der isolierte Gleichspannungswandler in einem einzigen Bauteil integriert sind.

Gemäß einer alternativen Ausführungsform kann es möglich sein, dass die isolierte Zwischenkreisspannung 60 Volt oder weniger entspricht.

Entsprechend einer alternativen Ausführungsform kann es möglich sein, dass wenigstens ein Filterelement enthalten ist.

Gemäß einer alternativen Ausführungsform kann es möglich sein, dass jede Schnittstelleneinrichtung wenigstens einen Transceiver enthält, sodass wenigstens ein Signal von mindestens einer ersten Energiespeichereinheit empfangbar ist zum Einstellen eines Leistungswertes an einer ersten Schnittstelleneinrichtung.

Entsprechend einer alternativen Ausführungsform kann es möglich sein, dass die Energiespeichereinheit in Form einer Akkumulators, insbesondere zur Versorgung einer Werkzeugmaschine mit elektrischer Energie, ausgestaltet ist.

Die Aufgabe wird des Weiteren gelöst durch ein System enthaltend eine Ladevorrichtung und wenigstens eine erste und zweite mit der Ladevorrichtung verbindbaren Energiespeichereinheit, wobei die Ladevorrichtung eine Netzstromanbindung zur wiederlösbaren Verbindung mit einer Netzstromquelle sowie eine Steuervorrichtung enthält.

Erfindungsgemäß enthält die Ladevorrichtung einen Gleichrichter, einen Leistungsfaktorkorrekturfilter, eine Voreinstellungsvorrichtung mit einen isolierten Gleichspannungswandler und Kondensator zum Erzeugen einer isolierten Zwischenkreisspannung sowie eine Feinregulierungsvorrichtung mit wenigstens einem ersten und zweiten geregelten und unisolierten Gleichspannungswandler, wobei jeder Gleichspannungswandler eine Schnittstelleneinrichtung zum wiederlösbaren Verbinden mit einer Energiespeichereinheit enthält, sodass ein Leistungswert an der ersten und/oder zweiten Schnittstelleneinrichtung bereitstellbar ist, und wobei der Leistungswert an der ersten und/oder zweiten Schnittstelleneinrichtung wenigstens einem Anteil einer Gesamtleistung entspricht.

Entsprechend einer alternativen Ausführungsform kann es möglich sein, dass jede Energiespeichereinheit jeweils einen Transceiver zum wenigstens Aussenden mindestens eines Signals an einen Transceiver der Steuervorrichtung enthält und wobei die Ladevorrichtung ausgestaltet ist zum Bereitstellen eines Spannungswerts an der wenigstens einen Schnittstelleneinrichtung entsprechend dem von der Ladevorrichtung empfangenen Signal, wobei der Leistungswert einem Anteil der Gesamtleistung entspricht.

Darüber hinaus wird die Aufgabe gelöst durch ein Verfahren zum Steuern und Regeln eines Systems enthaltend eine Ladevorrichtung und wenigstens eine erste und zweite mit der Ladevorrichtung verbindbaren Energiespeichereinheit, wobei die Ladevorrichtung eine Netzstromanbindung zur wiederlösbaren Verbindung mit einer Netzstromquelle sowie eine Steuervorrichtung enthält, und wobei die wenigstens erster und zweiter Energiespeichereinheit jeweils einen Transceiver zum Senden und Empfangen von Signalen enthält.

Erfindungsgemäß enthält das Verfahren die Verfahrensschritte:
- Erzeugen einer isolierten Zwischenkreisspannung durch eine Vorregulierungsvorrichtung enthaltend einen isolierten Gleichspannungswandler und einen Kondensator;
- Verbinden wenigstens einer Energiespeichereinheit mit wenigstens einer Schnittstelleneinrichtung der Ladevorrichtung;
- Aussenden wenigstens eines Signals von der wenigsten einen Energiespeichereinheit an die Ladevorrichtung; und
- Bereitstellen eines Leistungswerts an der wenigstens einen Schnittstelleneinrichtung entsprechend dem von der Ladevorrichtung empfangenen Signal, wobei der Leistungswerts an der wenigstens einen Schnittstelleneinrichtung einem Anteil der Gesamtleistung entspricht.

Weitere Vorteile ergeben sich aus der folgenden Figurenbeschreibung. In den Figuren sind verschiedene Ausführungsbeispiele der vorliegenden Erfindung dargestellt.

Die Figuren, die Beschreibung und die Ansprüche enthalten zahlreiche Merkmale in Kombination. Der Fachmann wird die Merkmale zweckmässigerweise auch einzeln betrachten und zu sinnvollen weiteren Kombinationen zusammenfassen.

Es zeigen:
- Figur 1: eine schematische Seitenansicht auf eine Ladevorrichtung gemäß einer beispielhaften Ausführungsform mit vier Schnittstelleneinrichtungen sowie drei Akkumulatoren;
- Figur 2: einen Schaltplan des erfindungsgemäßen Gegenstands gemäß einer ersten Ausführungsform;
- Figur 3: einen Schaltplan des erfindungsgemäßen Gegenstands gemäß einer zweiten Ausführungsform; und

### Ausführungsbeispiele:

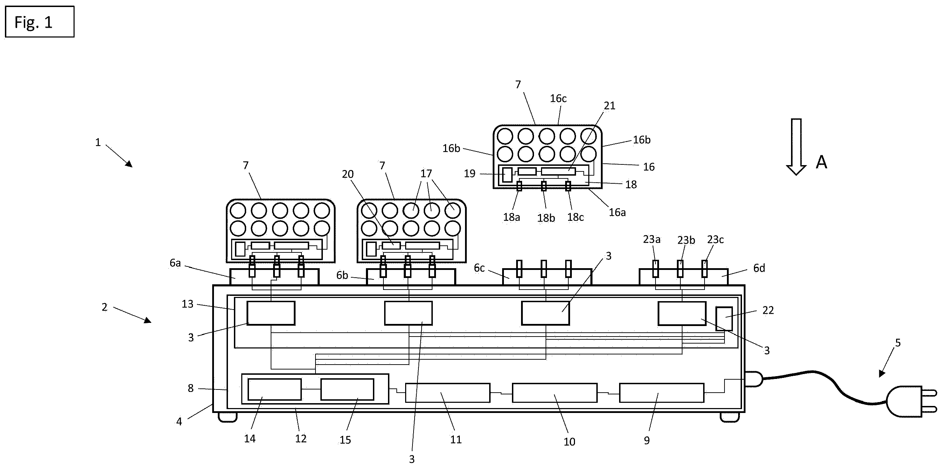

Figur 1 zeigt eine System 1 bestehend aus einer Ladevorrichtung 2 und einer Anzahl an Energiespeichereinheiten 3. In dem vorliegenden Ausführungsbeispiel sind die Energiespeichereinheiten 3 in Form von Akkumulatoren ausgestaltet. Die als Akkumulatoren ausgestaltenden Energiespeichereinheiten 7 können dabei beispielsweise zur Energieversorgung einer Werkzeugmaschine (d.h. ein Bohrhammer, eine Bohrmaschine, eine Säge, ein Schleifgerät oder dergleichen) dienen. Eine Werkzeugmaschine ist in den Figuren nicht dargestellt.

Die Ladevorrichtung 2 gemäß einer ersten Ausführungsform enthält im Wesentlichen ein Ladergehäuse 4, eine Netzstromanbindung 5 zur wiederlösbaren Verbindung mit einer Netzstromquelle sowie vier Schnittstelleneinrichtungen 6a, 6b, 6c, 6d. Die in den Figuren nicht gezeigte Netzstromquelle kann auch als Steckdose bezeichnet werden.

Das Ladergehäuse 4 enthält dabei eine Oberseite 4a, eine Unterseite 4b und vier Seitenwände 4c.

Jede Schnittstelleneinrichtung 6a, 6b, 6c, 6d dient zum Aufnehmen und Halten jeweils eine Energiespeichereinheit 7, sodass die Energiespeichereinheit 7 durch die Ladeeinrichtung 2 in einem Ladevorgang mit elektrischer Energie versorgt werden kann.

Die Schnittstelleneinrichtungen 6a, 6b, 6c, 6d sind an der Oberseite der Ladergehäuses 4 positioniert.

Des Weiteren enthält jede Schnittstelleneinrichtung 6a, 6b, 6c, 6d jeweils einen Pluskontakt 23a, einen Minuskontakt 23b und einen Kommunikationskontakt 23c.

Die Netzstromanbindung 5 ist in Form eines Stromkabels ausgestaltet und mit einer der Seitenwände 4c so verbunden, dass durch die Netzstromanbindung 5 elektrische Energie zu der Ladevorrichtung 2 gelangen kann. In dem vorliegenden Ausführungsbeispiel beträgt die elektrische Spannung der Netzstromquelle 230V. Gemäß einer alternativen Ausführungsform kann die Netzstromquelle auch weniger als 230V (z.B. 120V) bereitstellen.

In Figur 1 ist die Ladevorrichtung 2 gezeigt, bei der zwei der vier Schnittstelleneinrichtung 6a, 6b, 6c, 6d mit jeweils einer Energiespeichereinheit 7 verbunden sind. Eine dritte Energiespeichereinheit 7 wird in Richtung A auf eine dritte Schnittstelleneinrichtung 6c gebracht. Eine vierte Schnittstelleneinrichtung 6d ist ohne Energiespeichereinheit dargestellt. Die in den Figuren gezeigten Energiespeichereinheiten 7 sind im Wesentlich identisch ausgestaltet.

Des Weiteren enthält die Ladevorrichtung 2 gemäß der ersten Ausführungsform eine Steuervorrichtung 8, ein Filterelement 9, einen Gleichrichter 10, einen Leistungsfaktorkorrekturfilter 11, eine Voreinstellungsvorrichtung 12, einen Transceiver 22 sowie eine Feinregulierungsvorrichtung 13.

Gemäß einer alternativen Ausführungsform enthält die Ladevorrichtung 2 kein Filterelement.

Die Voreinstellungsvorrichtung 12 dient im Wesentlichen zum Reduzieren des Spannungswertes der Netzstromquelle von 230V auf einen Spannungswert von weniger als 60 Volt.

Dabei enthält die Voreinstellungsvorrichtung 12 im Wesentlichen einen isolierten Gleichspannungswandler 14 und einen Kondensator 15. Der isolierte Gleichspannungswandler 14 und der Kondensator 15 dienen zum Erzeugen eines Zwischenkreises bzw. einer isolierten Zwischenkreisspannung. Entsprechend dem ersten Ausführungsbeispiel wird durch die Voreinstellungsvorrichtung 12 eine Zwischenkreisspannung mit 55 Volt erzeugt. Die vorliegende Voreinstellungsvorrichtung 12 ist dabei so ausgestaltet, dass maximal 59 Volt oder weniger erzeugt werden können.

Die Steuervorrichtung 8 dient zum Steuern und Regeln der verschiedenen Funktionen der Ladevorrichtung 2 und deren Komponenten. Zu den Funktionen zählt unter anderem das Einstellen bzw. das Steuern und Regeln der Abgabeleistung (auch als Ladeleistung bezeichnet) an eine mit der Ladevorrichtung 2 verbundene Energiespeichereinheit 7.

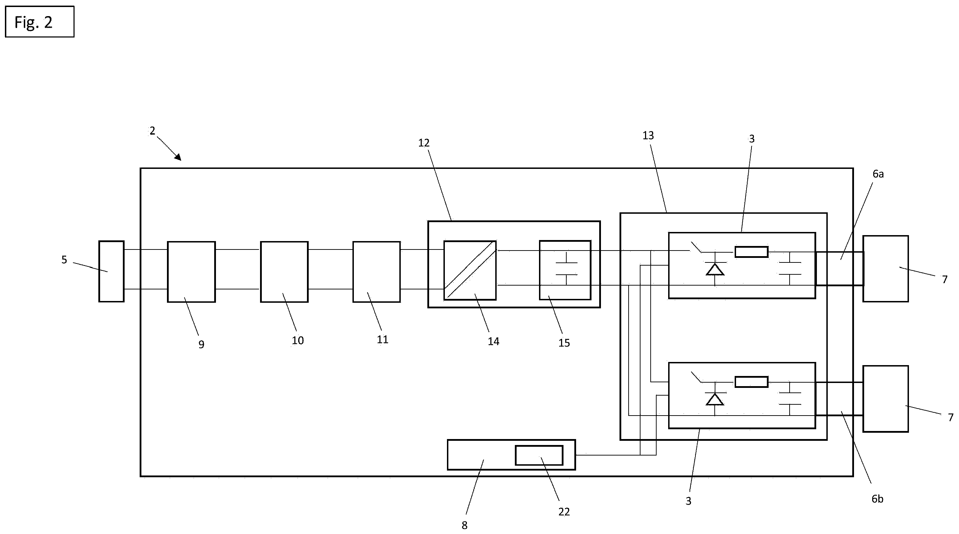

Die in Figur 1 und 2 gezeigte Ladevorrichtung 2 gemäß der ersten Ausführungsform weist einen Leistungsfaktorkorrekturfilter 11 als eigenständiges Bauteil auf, welches nicht Bestandteil der Voreinstellungsvorrichtung 12 ist.

Der in Figur 2 gezeigte Schaltplan weist eine Feinregulierungsvorrichtung 13 mit lediglich zwei unisolierten Gleichspannungswandlern 3 auf, welche jeweils eine Schnittstelleneinrichtung 6a, 6b enthält. Alternativ können auch mehr als zwei unisolierte Gleichspannungswandlern 3 mit jeweils einer Schnittstelleneinrichtung 6a, 6b, 6c, 6d enthalten sein.

Wie vorstehend bereits beschrieben dient jede Schnittstelleneinrichtung 6a, 6b, 6c, 6d zum wiederlösbaren Verbinden mit jeweils einer Energiespeichereinheit 7.

Jeder Gleichspannungswandler 3 ist so mit der Steuervorrichtung 8 verbunden, dass ein Spannungswert und ein Stromstärkewert zum Erzeugen eines Leistungswertes an einer Schnittstelleneinrichtung 6a, 6b, 6c, 6d bereitstellbar ist. Der an jeder Schnittstelleneinrichtung 6a, 6b, 6c, 6d einstellbare bzw. verfügbare Leistungswert beträgt dabei einem Anteil der im Zwischenkreis erzeugten Gesamtleistung. Es ist beispielsweise möglich, dass zu jedem Zeitpunkt ein gleich großer Anteil der Gesamtleistung an jeder Schnittstelleneinrichtung 6a, 6b, 6c, 6d bereitgestellt wird.

Die als Akkumulator ausgestaltete Energiespeichereinheit 7 kann beispielsweise mit der (nicht in Figuren gezeigten) Werkzeugmaschine wiederlösbar verbunden werden, um die Werkzeugmaschine mit elektrischer Energie zu versorgen.

Der Akkumulator 7 enthält im Wesentlichen ein Akku-Gehäuse 16, eine Anzahl an Energiespeicherzellen 17, eine Akku-Schnittstelle 18, einen Transceiver 19, eine Speichereinheit 20 sowie eine Steuerungseinrichtung 21.

Die Energiespeicherzellen 16 können auch als Akku-Zellen bezeichnet werden und sind im Inneren des Akku-Gehäuses 16 angeordnet.

Das Akku-Gehäuse 16 enthält dabei im Wesentlichen ein Deckelelement 16a, vier Seitenwände 16b und ein Bodenelement 16c.

Die Akku-Schnittstelle 18 ist an der Außenseite des Deckelelements 16a angeordnet und dient zum elektrischen bzw. elektronischen sowie mechanischen Verbinden des Akkumulators 7 mit der Werkzeugmaschine oder der Ladevorrichtung 2.

Der Transceiver 19 kann auch als Sende- und Empfangseinheit oder Kommunikationseinrichtung bezeichnet werden und dient zum Senden sowie Empfangen von elektrischen Signalen, wodurch Daten und Informationen von bzw. zu dem Akkumulator 7 gesendet werden können.

Zum elektrischen bzw. elektronischen Verbinden weist die Akku-Schnittstelle 18 einen Pluskontakt 18a, einen Minuskontakt 18b und einen Kommunikationskontakt 18c auf.

Der Pluskontakt 18a wird mit dem Pluskontakt 23a, der Minuskontakt 18b wird mit dem Minuskontakt 23b und der Kommunikationskontakt 18c wird mit dem Kommunikationskontakt 23c verbunden.

Der Plus- und Minuskontakt 18a, 18b dient zur Erzeugen eines Stromkreises, wenn der Akkumulator 7 mit einer Werkzeugmaschine oder einer Ladevorrichtung 2 verbunden ist. Der Kommunikationskontakt 18c steht mit dem Transceiver 19 in Verbindung und dient zum Senden und Empfangen von Daten sowie Informationen in Form von elektrischen Signalen. Der Transceiver 19 ist wiederum mit der Steuerungseinrichtung 21 verbunden.

Alternativ oder zusätzlich kann der Transceiver 19 auch als drahtlose Funkkommunikationseinrichtung (z.B. basierend auf einer Bluetooth-Technologie) ausgestaltet sein.

Die Energiespeicherzellen 17 dienen zum Aufnehmen, Speichern und erneuten Abgeben elektrischer Energie. Die Energiespeicherzellen 17 sind in zylindrischer Form sowie auf Basis einer Lithium-lonen-Technologie ausgestaltet. Jede Energiespeicherzelle 17 enthält an einem Ende eine Kontakteinrichtung, die zur Übertragung elektrischer Energie dient. Die einzelnen Kontakteinrichtung sind über entsprechende Leitungen mit der Steuerungseinrichtung 21 des Akkumulators 7 verbunden.

Alternativ können die Energiespeicherzellen 17 auch auf einer anderen geeigneten Technologie basieren.

Die zylindrische Form der Energiespeicherzellen 17 ist ebenfalls optional, sodass auch jede andere geeignete Form bzw. Geometrie gewählt werden kann. So ist es insbesondere auch möglich, dass die Energiespeicherzellen 17 als Pouchzellen ausgestaltet sind.

Es ist zudem auch möglich, dass der Akkumulator 7 sowohl zylindrische Energiespeicherzellen 17 als auch Pouch-Zellen enthält. Es ist insbesondere möglich, dass der Akkumulator 7 lediglich eine einzige zylindrische Energiespeicherzelle 17 und eine einzige Pouchzelle enthält.

Die Steuerungseinrichtung 21 regelt und steuert verschiedene Funktionen des Akkumulators 7. Zu den Funktion gehört unter anderen die Steuerung der Aufnahme und Abgabe von elektrischer Energie in bzw. aus den Energiespeicherzellen 17. Darüber hinaus wird mit Hilfe der Steuerungseinrichtung 21 die Menge an elektrischer Energie gesteuert, die von den Energiespeicherzellen 17 aufgenommen oder abgegeben werden sollen.

Die Speichereinheit 20 steht in Verbindung mit der Steuerungseinrichtung 21 und dient zum Speichern sowie Bereitstellen von Daten und Informationen. Zu den Daten und Informationen gehören unter anderen Schwellwerte für die Spannung und Stromstärke für einen Lade- und Entladevorgang der Energiespeichereinheit 7.

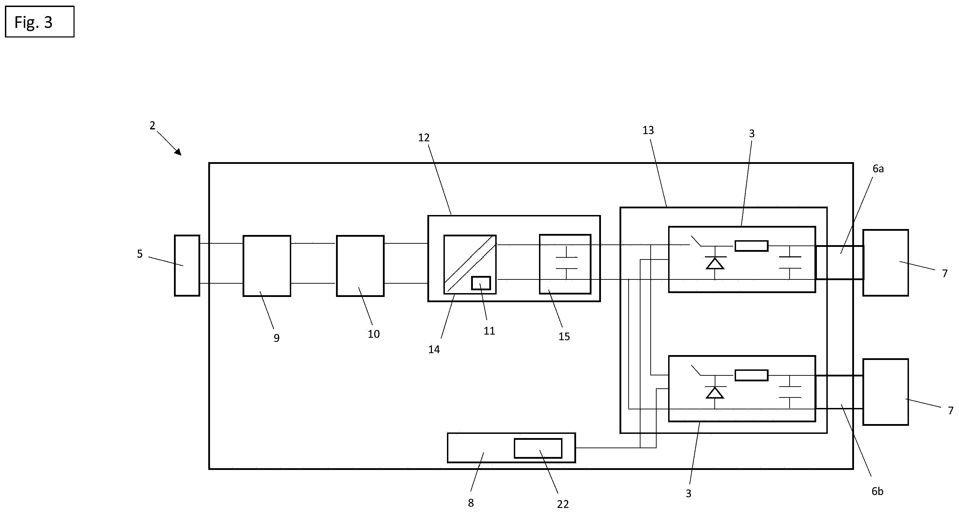

In Figur 3 ist eine Ladevorrichtung 2 gemäß einer zweiten Ausführungsform gezeigt, bei der der Leistungsfaktorkorrekturfilter 11 kein eigenständiges Bauteil ist, sondern zusammen mit dem isolierten Gleichspannungswandler 14 in einem einzigen Bauteil ausgeformt ist. Hierdurch ist der Leistungsfaktorkorrekturfilter 11 ein Bestandteil der Voreinstellungsvorrichtung 12.

Der in Figur 3 gezeigte Schaltplan weist lediglich zwei Schnittstelleneinrichtungen 6a, 6b mit jeweils einem unisolierten Gleichspannungswandler 3 auf.

Zur Ausführung des Verfahrens wird zunächst im Zwischenkreis durch den isolierten Gleichspannungswandler 14 und Kondensator 15 eine Netzspannung (z.B. 230V) auf eine Zwischenkreisspannung reduziert.

Eine erste als Akkumulator ausgestaltete Energiespeichereinheit 7 wird mit der ersten Schnittstelleneinrichtung 6a und eine zweite als Akkumulator ausgestaltete Energiespeichereinheit 7 wird mit der zweiten Schnittstelleneinrichtung 6b verbunden. Durch die Verbindung der Energiespeichereinheiten 7 mit den jeweiligen Schnittstelleneinrichtungen 6a, 6b, 6c, 6d können zum einen elektrische Signale zwischen der Energiespeichereinheit 7 und der Ladevorrichtung 2 ausgetauscht werden. Zum anderen kann elektrische Energie von der Ladevorrichtung 2 zu den jeweiligen Energiespeichereinheiten 7 gelangen.

Wenn die erste Energiespeichereinheit 7 mit der ersten Schnittstelleneinrichtung 6a verbunden ist, wird ein entsprechendes Signal von dem Transceiver 19 der ersten Energiespeichereinheit 7 an den Transceiver 22 der Ladevorrichtung 2 gesendet. Das Signal gelangt zu der Steuervorrichtung 8 der Ladevorrichtung 2. Durch das empfangene Signal wird der Steuervorrichtung 8 die spezifischen Parameter für einen Ladevorgang der erste Energiespeichereinheit 7 übermittelt. Ebenso wird ein entsprechendes Signal von dem Transceiver 19 der zweiten Energiespeichereinheit 7 an den Transceiver 22 der Ladevorrichtung 2 gesendet, wenn die zweite Energiespeichereinheit 7 mit der zweiten Schnittstelleneinrichtung 6b verbunden ist. Dieses Signal gelangt ebenfalls zu der Steuervorrichtung 8 der Ladevorrichtung 2. Durch das empfangene Signal wird der Steuervorrichtung 8 die spezifischen Parameter für einen Ladevorgang der zweite Energiespeichereinheit 7 übermittelt. Die Parameter enthalten unter anderem Schwellwerte für die Spannung und Stromstärke für den Ladevorgang.

Mit Hilfe der Steuervorrichtung 8 wird durch den ersten Gleichspannungswandler 3 ein erster Leistungswert eingestellt, sodass an der ersten Schnittstelleneinrichtung 6a eine erste Leistung zum Laden der ersten Energiespeichereinheit 7 entsprechend dem Signal eingestellt ist.

Des Weiteren wird durch den zweiten Gleichspannungswandler 3 ein zweiter Leistungswert eingestellt, sodass an der zweiten Schnittstelleneinrichtung 6b eine zweite Leistung zum Laden der zweiten Energiespeichereinheit 7 entsprechend dem Signal eingestellt ist

Der erste und zweite Leistungswert entspricht dabei jeweils einem Anteile der verfügbaren Gesamtleistung der Ladevorrichtung 2.

### Bezugszeichen

- 1: System
- 2: Ladevorrichtung
- 3: unisolierter Gleichspannungswandler
- 4: Ladergehäuse
- 5: Netzstromanbindung
- 6a: erste Schnittstelleneinrichtung
- 6b: zweite Schnittstelleneinrichtung
- 6c: dritte Schnittstelleneinrichtung
- 6d: vierte Schnittstelleneinrichtung
- 7: Energiespeichereinheit
- 8: Steuervorrichtung der Ladevorrichtung
- 9: Filterelement
- 10: Gleichrichter
- 11: Leistungsfaktorkorrekturfilter
- 12: Voreinstellungsvorrichtung
- 13: Feinregulierungsvorrichtung
- 14: isolierter Gleichspannungswandler
- 15: Kondensator
- 16: Akku-Gehäuse
- 16a: Deckelelement
- 16b: Seitenwände
- 16c: Bodenelement
- 17: Energiespeicherzelle
- 18: Akku-Schnittstelle
- 18a: Pluskontakt der Akku-Schnittstelle
- 18b: Minuskontakt der Akku-Schnittstelle
- 18c: Kommunikationskontakt der Akku-Schnittstelle
- 19: Transceiver der Energiespeichereinheit
- 20: Speichereinheit der Energiespeichereinheit
- 21: Steuerungseinrichtung
- 22: Transceiver der Ladevorrichtung
- 23a: Pluskontakt einer Schnittstelleneinrichtung
- 23b: Minuskontakt einer Schnittstelleneinrichtung
- 23c: Kommunikationskontakt einer Schnittstelleneinrichtung

## Patentansprüche

1. Ladevorrichtung (2), insbesondere zum Versorgen wenigstens einer ersten und zweiten Energiespeichereinheit (7) mit elektrischer Energie, enthaltend eine Netzstromanbindung (5) zur wiederlösbaren Verbindung mit einer Netzstromquelle sowie eine Steuervorrichtung (8),
**gekennzeichnet durch**
- einen Gleichrichter (10);
- einen Leistungsfaktorkorrekturfilter (11);
- eine Voreinstellungsvorrichtung (12) mit einen isolierten Gleichspannungswandler (14) und Kondensator (15) zum Erzeugen einer isolierten Zwischenkreisspannung sowie
- eine Feinregulierungsvorrichtung (13) mit wenigstens einem ersten und zweiten geregelten und unisolierten Gleichspannungswandler (3), wobei jeder Gleichspannungswandler (3) eine Schnittstelleneinrichtung (6a, 6b, 6c, 6d) zum wiederlösbaren Verbinden mit einer Energiespeichereinheit (7) enthält, sodass ein Leistungswert an der ersten und/oder zweiten Schnittstelleneinrichtung (6a, 6b, 6c, 6d) bereitstellbar ist, und wobei der Leistungswert an der ersten und/oder zweiten Schnittstelleneinrichtung (6a, 6b, 6c, 6d) wenigstens einem Anteil einer Gesamtleistung entspricht.

2. Ladevorrichtung (2) nach Anspruch 1,
**dadurch gekennzeichnet, dass** die Voreinstellungsvorrichtung (12) wenigstens einen Leistungsfaktorkorrekturfilter (11) enthält.

3. Ladevorrichtung (2) nach Anspruch 1 oder 2,
**dadurch gekennzeichnet, dass** der Leistungsfaktorkorrekturfilter (11) und der isolierte Gleichspannungswandler (14) in einem einzigen Bauteil integriert sind.

4. Ladevorrichtung (2) nach wenigstens einem der Ansprüche 1 bis 3,
**dadurch gekennzeichnet, dass** die isolierte Zwischenkreisspannung 60 Volt oder weniger entspricht.

5. Ladevorrichtung (2) nach wenigstens einem der Ansprüche 1 bis 4,
**dadurch gekennzeichnet, dass** wenigstens ein Filterelement (9) enthalten ist.

6. Ladevorrichtung (2) nach wenigstens einem der Ansprüche 1 bis 5,
**dadurch gekennzeichnet, dass** jede Schnittstelleneinrichtung (6a, 6b, 6c, 6d) wenigstens eine Transceiver (19) enthält, sodass wenigstens ein Signal von mindestens einer ersten Energiespeichereinheit (7) empfangbar ist zum Einstellen eines Leistungswertes an einer ersten Schnittstelleneinrichtung (6a, 6b, 6c, 6d).

7. Ladevorrichtung (2) nach wenigstens einem der Ansprüche 1 bis 6,
**dadurch gekennzeichnet, dass** die Energiespeichereinheit (7) in Form einer Akkumulators, insbesondere zur Versorgung einer Werkzeugmaschine mit elektrischer Energie, ausgestaltet ist.

8. System (1) enthaltend eine Ladevorrichtung (2) und wenigstens eine erste und zweite mit der Ladevorrichtung (2) verbindbaren Energiespeichereinheit (7), wobei die Ladevorrichtung (2) eine Netzstromanbindung (5) zur wiederlösbaren Verbindung mit einer Netzstromquelle sowie eine Steuervorrichtung (8) enthält,
**dadurch gekennzeichnet, dass** die Ladevorrichtung (2) einen Gleichrichter (10), einen Leistungsfaktorkorrekturfilter (11), eine Voreinstellungsvorrichtung (12) mit einen isolierten Gleichspannungswandler (14) und Kondensator (15) zum Erzeugen einer isolierten Zwischenkreisspannung sowie eine Feinregulierungsvorrichtung (13) mit wenigstens einem ersten und zweiten geregelten und unisolierten Gleichspannungswandler (3), wobei jeder Gleichspannungswandler (3) eine Schnittstelleneinrichtung (6a, 6b, 6c, 6d) zum wiederlösbaren Verbinden mit einer Energiespeichereinheit (7) enthält, sodass ein Leistungswert an der ersten und/oder zweiten Schnittstelleneinrichtung (6a, 6b, 6c, 6d) bereitstellbar ist, und wobei der Leistungswert an der ersten und/oder zweiten Schnittstelleneinrichtung (6a, 6b, 6c, 6d) wenigstens einem Anteil einer Gesamtleistung entspricht.

9. System (1) nach Anspruch 8,
**dadurch gekennzeichnet, dass** jede Energiespeichereinheit (7) jeweils einen Transceiver (19) zum wenigstens Aussenden mindestens eines Signals an einen Transceiver (22) der Steuervorrichtung (8) enthält und wobei die Ladevorrichtung (2) ausgestaltet ist zum Bereitstellen eines Leistungswerts an der wenigstens einen Schnittstelleneinrichtung (6a, 6b, 6c, 6d) entsprechend dem von der Ladevorrichtung (2) empfangenen Signal.

10. Verfahren zum Steuern und Regeln eines Systems (1) enthaltend eine Ladevorrichtung (2) und wenigstens eine erste und zweite mit der Ladevorrichtung (2) verbindbaren Energiespeichereinheit (7), wobei die Ladevorrichtung (2) eine Netzstromanbindung (5) zur wiederlösbaren Verbindung mit einer Netzstromquelle sowie eine Steuervorrichtung (8) enthält, und wobei die wenigstens erster und zweiter Energiespeichereinheit (7) jeweils einen Transceiver (19) zum Senden und Empfangen von Signalen enthält,
**gekennzeichnet durch** die Verfahrensschritte:
- Erzeugen einer isolierten Zwischenkreisspannung durch eine Vorregulierungsvorrichtung enthaltend einen isolierten Gleichspannungswandler (14) und einen Kondensator (15);
- Verbinden wenigstens einer Energiespeichereinheit (7) mit wenigstens einer Schnittstelleneinrichtung (6a, 6b, 6c, 6d) der Ladevorrichtung (2);
- Aussenden wenigstens eines Signals von der wenigsten einen Energiespeichereinheit (7) an die Ladevorrichtung (2); und
- Bereitstellen eines Leistungswerts an der wenigstens einen Schnittstelleneinrichtung (6a, 6b, 6c, 6d) entsprechend dem von der Ladevorrichtung (2) empfangenen Signal, wobei der Leistungswerts an der wenigstens einen Schnittstelleneinrichtung (6a, 6b, 6c, 6d) einem Anteil der Gesamtleistung entspricht.
